# EUROPÄISCHE PATENTANMELDUNG

(11) **EP 3 338 918 A1**
(43) Veröffentlichungstag der Anmeldung: **27.06.2018**
(21) Anmeldenummer: 17203710.3
(22) Anmeldetag: 27.11.2017
(51) Int. Cl.: B22F 3/105, B33Y 10/00, B33Y 30/00, B29C 64/245, B22F 5/00

(54) **SCHICHTBAUVORRICHTUNG UND SCHICHTBAUVERFAHREN ZUM ADDITIVEN HERSTELLEN ZUMINDEST EINES BAUTEILBEREICHS EINES BAUTEILS**

(30) Priorität: 15.12.2016 DE 102016225178
(71) Anmelder: MTU Aero Engines AG, 80995 München (DE)
(72) Erfinder: Schlothauer, Steffen, 85253 Erdweg (DE); Rau, Christoph, 82194 Gröbenzell (DE); Liebl, Christian, 85461 Bockhorn (DE); Casper, Johannes, 85737 München (DE); Peschke, Thomas, 82194 Gröbenzell (DE); Ladewig, Alexander, 83707 Bad Wiessee (DE)

(57) **Zusammenfassung**

Die Erfindung betrifft eine Schichtbauvorrichtung zur additiven Herstellung zumindest eines Bauteilbereichs eines Bauteils (12), insbesondere eines Bauteils einer Strömungsmaschine, durch ein additives Schichtbauverfahren umfassend mindestens eine Strahlungsquelle (14) zum Erzeugen wenigstens eines Hochenergiestrahls (16), mittels welchem mindestens eine Pulverschicht eines Bauteilwerkstoffs im Bereich einer Aufbau- und Fügezone (18) einer Bauplattform (20) lokal zu wenigstens einer Bauteilschicht verfestigbar ist, wobei die Bauplattform (20) aus mehreren, lösbar miteinander verbundenen Bauplattformsegmenten (22) mit jeweiligen Auflageflächen (24) ausgebildet ist. Dabei sind die Bauplattformsegmente (22) derart zueinander angeordnet, dass die Anordnung ihrer Auflageflächen (24) einer Kontur zumindest einer ersten, auf der Bauplattform (20) aufzutragenden Bauteilschicht und/oder einer Kontur (26) des herzustellenden Bauteils (12) in einem Auflagebereich (30) auf der Bauplattform (20) nachempfunden ist, wobei eine Fläche der ersten Bauteilschicht und/oder eine Fläche (28) des Auflagebereichs (30) des Bauteils (12) vollständig innerhalb der Anordnung der Auflageflächen (24) angeordnet ist. Die Erfindung betrifft weiterhin ein Schichtbauverfahren zur additiven Herstellung zumindest eines Bauteilbereichs eines Bauteils (12).

## Beschreibung

Die Erfindung betrifft eine Schichtbauvorrichtung zum additiven Herstellen zumindest eines Bauteilbereichs eines Bauteils gemäß dem Oberbegriff des Anspruchs 1 sowie ein Schichtbauverfahren gemäß dem Oberbegriff des Anspruchs 11.

Verfahren und Vorrichtungen zur Herstellung von einzelnen Bauteilbereichen oder vollständigen Bauteilen sind in einer großen Vielzahl bekannt. Insbesondere sind additive bzw. generative Fertigungsverfahren (sog. Rapid Manufacturing- bzw. Rapid Prototyping-Verfahren) bekannt, bei denen das Bauteil, bei dem es sich beispielsweise um ein Bauteil einer Strömungsmaschine bzw. eines Flugtriebwerks handeln kann, schichtweise aufgebaut wird. Vorwiegend metallische Bauteile können beispielsweise durch Laser- bzw. Elektronenstrahlschmelzverfahren hergestellt werden. Dabei wird zunächst schichtweise mindestens ein pulverförmiger Bauteilwerkstoff im Bereich einer Aufbau- und Fügezone aufgetragen, um eine Pulverschicht zu bilden. Anschließend wird der Bauteilwerkstoff lokal verfestigt, indem dem Bauteilwerkstoff im Bereich der Aufbau- und Fügezone Energie mittels wenigstens eines Hochenergiestrahls zugeführt wird, wodurch der Bauteilwerkstoff schmilzt und eine Bauteilschicht bildet. Der Hochenergiestrahl wird dabei in Abhängigkeit einer Schichtinformation der jeweils herzustellenden Bauteilschicht gesteuert. Die Schichtinformationen werden üblicherweise aus einem 3D-CAD-Körper des Bauteils erzeugt und in einzelne Bauteilschichten unterteilt. Nach dem Verfestigen des geschmolzenen Bauteilwerkstoffs wird die Bauplattform schichtweise um eine vordefinierte Schichtdicke abgesenkt. Danach werden die genannten Schritte bis zur endgültigen Fertigstellung des gewünschten Bauteilbereichs oder des gesamten Bauteils wiederholt. Der Bauteilbereich bzw. das Bauteil kann dabei grundsätzlich auf einer Bauplattform oder auf einem bereits erzeugten Teil des Bauteils oder Bauteilbereichs hergestellt werden. Die Vorteile dieser additiven Fertigung liegen insbesondere in der Möglichkeit, sehr komplexe Bauteilgeometrien mit Hohlräumen, Hinterschnitten und dergleichen im Rahmen eines einzelnen Verfahrens herstellen zu können.

Aus der WO 2012/076205 A1 sind eine Schichtbauvorrichtung und ein Schichtbauverfahren bekannt, die eine segmentierte Bauplattform beziehungsweise Substratplatte umfassen. Dabei ist die Substratplatte in mehrere Substratplattensegmente unterteilt, wobei die Substratplattensegmente lösbar miteinander oder lösbar mit einem Grundträger verbunden sind. Nachteilig an dieser Schichtbauvorrichtung und dem entsprechenden Schichtbauverfahren ist jedoch, dass die zusammengefügten Substratplattensegmente eine große Auflagefläche zum flächenmäßigen Auftrag des Bauteilwerkstoffs vorhalten beziehungsweise bilden. Durch den vollflächigen Materialauftrag wird eine sehr große Menge an Bauteilwerkstoff benötigt. Zudem muss eine relativ große Menge an nicht benötigtem Bauteilwerkstoff wieder von der Substratplatte entfernt werden. Dies führt zu zeitlichen Verzögerungen während der Herstellung des Bauteils.

Aufgabe der vorliegenden Erfindung ist es, eine gattungsgemäße Schichtbauvorrichtung und ein gattungsgemäßes Schichtbauverfahren anzugeben, welche die additive Herstellung von Bauteilbereichen oder vollständigen Bauteilen mit höheren Produktionsgeschwindigkeiten ermöglicht. Eine weitere Aufgabe der Erfindung besteht darin, ein entsprechend additiv gefertigtes Bauteil bereitzustellen.

Die Aufgaben werden erfindungsgemäß durch eine Schichtbauvorrichtung mit den Merkmalen des Patentanspruchs 1, durch ein Schichtbauverfahren mit den Merkmalen des Patentanspruchs 11 sowie durch ein Bauteil gemäß Patentanspruch 14 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Schichtbauvorrichtung zur additiven Herstellung zumindest eines Bauteilbereichs eines Bauteils, insbesondere eines Bauteils einer Strömungsmaschine, durch ein additives Schichtbauverfahren umfassend mindestens eine Strahlungsquelle zum Erzeugen wenigstens eines Hochenergiestrahls, mittels welchem mindestens eine Pulverschicht eines Bauteilwerkstoffs im Bereich einer Aufbau- und Fügezone einer Bauplattform lokal zu wenigstens einer Bauteilschicht verfestigbar ist und wobei die Bauplattform aus mehreren, lösbar miteinander verbundenen Bauplattformsegmenten mit jeweiligen Auflageflächen ausgebildet ist. Erfindungsgemäß sind die Bauplattformsegmente derart zueinander angeordnet, dass die Anordnung ihrer Auflageflächen einer Kontur zumindest einer ersten, auf der Bauplattform aufzutragenden Bauteilschicht und/oder einer Kontur des herzustellenden Bauteils in einem Auflagebereich auf der Bauplattform nachempfunden ist, wobei eine Fläche der ersten Bauteilschicht und/oder eine Fläche des Auflagebereichs des Bauteils vollständig innerhalb der Anordnung der Auflageflächen angeordnet ist. Durch die vorteilhafte Ausgestaltung der Bauplattform beziehungsweise die beschriebene Anordnung der Auflageflächen der Bauplattformsegmente passt sich die Auflagefläche der Bauplattform an die Kontur und Fläche der ersten Bauteilschicht und/oder der Kontur und Fläche des herzustellenden Bauteils in seinem Auflagebereich auf der Bauplattform an. Dies bedeutet, dass die Auflagefläche der Bauplattform sich der Kontur und Fläche des herzustellenden Bauteils anpasst, sodass die vorzuhaltende Auflagefläche der Bauplattform minimiert wird. Entsprechend verringert sich die Menge an aufzutragendem Bauteilwerkstoff, sodass die Menge an nicht benötigtem Bauteilwerkstoff ebenfalls minimiert wird. Dadurch können zeitliche Verzögerungen durch den Abtransport von großen Mengen überschüssigen Bauteilwerkstoffs während der Herstellung des Bauteils vermieden werden. Insgesamt können dadurch die Produktionsgeschwindigkeiten bei der additiven Herstellung von Bauteilbereichen oder vollständigen Bauteilen deutlich erhöht werden.

In vorteilhaften Ausgestaltungen der erfindungsgemäßen Schichtbauvorrichtung sind die Auflageflächen der Bauplattformsegmente quadratisch, rechteckig, rautenförmig oder vieleckig ausgebildet. Auch andere Formen sind denkbar. Dabei kann die Bauplattform aus einer Vielzahl von Bauplattformsegmenten mit gleichen oder unterschiedlich ausgebildeten Auflageflächen ausgebildet werden. Vorteilhafterweise kann so die Auflagefläche der Bauplattform insgesamt der Kontur beziehungsweise der Fläche des Auflagebereichs des herzustellenden Bauteils beziehungsweise der ersten, auf der Bauplattform aufzutragenden Bauteilschicht angepasst werden.

In weiteren vorteilhaften Ausgestaltungen der erfindungsgemäßen Schichtbauvorrichtung umfasst die Schichtbauvorrichtung mindestens eine unterhalb der jeweiligen Bauplattformsegmente angeordnete und damit wirkverbundene Hebe- und Senkvorrichtung. Dies bedeutet, dass entweder jedem Bauplattformsegment eine Hebe- und Senkvorrichtung zugeordnet ist oder dass mehrere Bauplattformsegmente mittels einer Hebe- und Senkvorrichtung bewegbar sind. Vorteilhafterweise lässt sich dadurch beispielsweise vor oder nach dem schichtweisen Absenken der Bauplattform nach der Erzeugung einer Bauteilschicht ein Teilbereich der Bauplattform lösen und absenken, falls er für die weiteren Herstellungsschritte nicht mehr benötigt wird. Der Auftrag des Bauteilwerkstoffs kann dadurch ebenfalls weiter verringert werden.

In weiteren vorteilhaften Ausgestaltungen der erfindungsgemäßen Schichtbauvorrichtung sind die Bauplattformsegmente auf einem Grundträger angeordnet. Dabei kann beispielsweise der Grundträger eine Vielzahl von Ausnehmungen zur Aufnahme und Anordnung der Bauplattformsegmente aufweisen. Durch die Vielzahl von Ausnehmungen besteht die Möglichkeit, die einzelnen Bauplattformsegmente in einer Art Steckverfahren derart anzuordnen, dass sie wiederum der Kontur beziehungsweise der Fläche der ersten aufzutragenden Bauteilschicht oder des herzustellenden Bauteils im Auflagebereich der Bauplattform entsprechen. Entscheidend bei einer derartigen Steckanordnung ist jedoch, dass die Auflageflächen der jeweiligen Bauplattformsegmente bündig aneinanderstoßen, sodass es zu keinem Verlust an Werkstoffpulver kommen kann.

In weiteren vorteilhaften Ausgestaltungen der erfindungsgemäßen Schichtbauvorrichtung sind die Bauplattformsegmente magnetisch und/oder mechanisch miteinander verbindbar. Über eine insbesondere elektromagnetische Steuerung der einzelnen Bauplattformsegmente können diese sicher miteinander verbunden werden und einfach voneinander gelöst werden. Als mechanische Verbindung kann beispielsweise eine Schablone dienen, die die einzelnen Bauplattformsegmente miteinander verbindet. Auch andere Befestigungsmöglichkeiten sind denkbar.

In einer weiteren vorteilhaften Ausgestaltung der erfindungsgemäßen Schichtbauvorrichtung weist die Auflagefläche des Bauplattformsegments eine Längs- und/oder Quererstreckung zwischen 0,5 cm und 5,0 cm auf. Allerdings besteht auch die Möglichkeit, andere Maße zu verwenden. Grundsätzlich kann dabei gesagt werden, dass je kleiner die Auflagefläche ist, desto genauer kann die Fläche der Bauplattform an die Kontur oder Fläche der ersten aufzutragenden Bauteilschicht oder die Kontur oder Fläche des herzustellenden Bauteils in dem Auflagebereich auf der Bauplattform nachempfunden und angepasst werden.

Die mit der Schichtbauvorrichtung zu verarbeitenden Bauteilwerkstoffe können insbesondere aus der Gruppe Eisen, Titan, Nickel, Chrom, Kobalt, Kupfer, Aluminium, Stahl, AluminiumLegierung, Titan-Legierung, Chrom-Legierung, Kobalt-Legierung, Nickelbasis-Legierung, Kupfer-Legierung, Mg2Si und Titanaluminide ausgewählt werden.

Weitere Vorteile ergeben sich, wenn als Hochenergiestrahl ein Elektronenstrahl und/oder ein Laserstrahl verwendet werden. Hierdurch können Bauteilbereiche oder Bauteile hergestellt werden, deren mechanischen Eigenschaften zumindest im Wesentlichen denen des Bauteilwerkstoffs entsprechen. Zur Erzeugung des Laserstrahls können beispielsweise CO₂-Laser, Nd:YAG-Laser, Yb-Faserlaser, Diodenlaser oder dergleichen vorgesehen sein. Ebenso kann vorgesehen sein, dass zwei oder mehr Elektronen- bzw. Laserstrahlen verwendet werden, um die Bearbeitungszeit zu reduzieren und/oder um besonders großflächige Bauteilschichten herstellen zu können.

Ein zweiter Aspekt der Erfindung betrifft ein Schichtbauverfahren zum additiven Herstellen zumindest eines Bauteilbereichs eines Bauteils, insbesondere eines Bauteils einer Strömungsmaschine, umfassend zumindest folgende Schritte: a) Auftragen von mindestens einer Pulverschicht eines Werkstoffs im Bereich einer Aufbau- und Fügezone mindestens einer absenkbaren Bauplattform; b) schichtweises und lokales Verschmelzen und/oder Versintern des Werkstoffs zum Ausbilden einer Bauteilschicht durch selektives Belichten des Werkstoffs mit wenigstens einem Hochenergiestrahl gemäß einer vorbestimmten Belichtungsstrategie; c) schichtweises Absenken der Bauplattform um eine vordefinierte Schichtdicke; und d) Wiederholen der Schritte a) bis c) bis zur Fertigstellung des Bauteilbereichs. Erfindungsgemäß wird dabei vor Schritt a) die Bauplattform aus mehreren, lösbar miteinander verbundenen Bauplattformsegmenten mit jeweiligen Auflageflächen gefügt, derart, dass die Anordnung der Auflageflächen der Bauplattformsegmente einer Kontur zumindest einer ersten, auf der Bauplattform aufzutragenden Bauteilschicht und/oder einer Kontur des herzustellenden Bauteils in einem Auflagebereich auf der Bauplattform nachempfunden ist. Dabei ist eine Fläche der ersten Bauteilschicht und/oder eine Fläche des Auflagebereichs des Bauteils vollständig innerhalb der Anordnung der Auflageflächen angeordnet. Durch das Fügen der Bauplattform aus mehreren, lösbar miteinander verbundenen Bauplattformsegmenten ist es vorteilhafterweise möglich, die Fläche der Bauplattform an die Kontur beziehungsweise die Fläche der ersten Bauteilschicht oder des herzustellenden Bauteils in dem Auflagebereich auf der Bauplattform anzupassen. Weitere Auflageflächen der Bauplattform werden nicht benötigt, sodass ein übermäßiger Auftrag an Bauteilwerkstoff vermieden werden kann. Demgemäß kann auch die Menge an nicht benötigten Bauteilwerkstoff reduziert werden, sodass dessen Entfernung zu keinen wesentlichen zeitlichen Verzögerungen während der Herstellung des Bauteils führt. Das erfindungsgemäße Schichtbauverfahren ermöglicht daher höhere Produktionsgeschwindigkeiten. Das schichtweise Auftragen der Pulverschicht gemäß Schritt a) erfolgt ausschließlich auf die Auflageflächen der Bauteilsegmente und/oder den Bereich überhalb der Bauteilsegmente.

In einer weiteren vorteilhaften Ausgestaltung des erfindungsgemäßen Verfahrens wird vor oder nach dem schichtweisen Absenken der Bauplattform gemäß Schritt c) ein Lösen und Absenken von für den weiteren Schichtaufbau nicht benötigten Bauteilsegmenten durchgeführt. Durch diese Maßnahme wird wiederum die Auflagefläche der Bauplattform an die jeweilige Kontur beziehungsweise Fläche des herzustellenden Bauteils angepasst. Durch diese Optimierung kann wiederum Bauteilwerkstoff eingespart werden.

In weiteren vorteilhaften Ausgestaltungen des erfindungsgemäßen Verfahrens erfolgen die Anordnung und/oder das Lösen und/oder eine Bewegung der Bauteilsegmente zueinander rechnergesteuert. Vorteilhafterweise können die Produktionsprozesse vorbestimmt werden. Ein automatisierter Verfahrensablauf ist möglich und trägt wiederum zu einer Erhöhung der Produktionsgeschwindigkeit bei.

Ein dritter Aspekt der Erfindung betrifft ein Bauteil für eine Strömungsmaschine, insbesondere ein Verdichter- oder Turbinenbauteil, wobei eine hohe Produktionsgeschwindigkeit des Bauteils erfindungsgemäß dadurch sichergestellt wird, dass dieses zumindest bereichsweise oder vollständig durch ein Verfahren gemäß dem zweiten Erfindungsaspekt und/oder mittels einer Vorrichtung gemäß dem ersten Erfindungsaspekt erhalten ist. Die sich hieraus ergebenden Merkmale und deren Vorteile gehen aus der Beschreibung des ersten und zweiten Erfindungsaspekts hervor, wobei vorteilhafte Ausgestaltungen des ersten und zweiten Erfindungsaspekts als vorteilhafte Ausgestaltungen des dritten Erfindungsaspekts und umgekehrt anzusehen sind.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Darstellung einer erfindungsgemäßen Schichtbauvorrichtung gemäß einer ersten Ausführungsform;
- Fig. 2: eine schematisch dargestellte Aufsicht auf eine Bauplattform der erfindungsgemäßen Schichtbauvorrichtung gemäß einer zweiten Ausführungsform; und
- Fig. 3: eine schematisch dargestellte Aufsicht auf eine Bauplattform der erfindungsgemäßen Schichtbauvorrichtung gemäß einer dritten Ausführungsform.

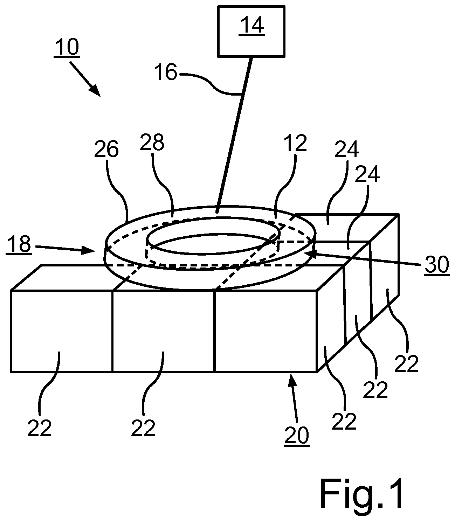

Fig. 1 zeigt eine schematische Darstellung einer Schichtbauvorrichtung 10 gemäß einer ersten Ausführungsform. Die Schichtbauvorrichtung 10 umfasst dabei eine Strahlungsquelle 14 zum Erzeugen eines Hochenergiestrahls 16. In dem dargestellten Ausführungsbeispiel handelt es sich bei der Strahlungsquelle 14 um eine Laserquelle und demgemäß bei dem Hochenergiestrahl 16 um einen Laserstrahl. Mittels des Laserstrahls 16 wird mindestens eine Pulverschicht eines Bauteilwerkstoffs im Bereich einer Aufbau- und Fügezone 18 einer Bauplattform 20 lokal zu wenigstens einer Bauteilschicht verfestigt. Man erkennt, dass die Bauplattform 20 aus mehreren, lösbar miteinander verbundenen Bauplattformsegmenten 22 mit jeweiligen Auflageflächen 24 ausgebildet ist. In dem dargestellten Ausführungsbeispiel weisen die Bauplattformsegmente 22 Würfelform auf. Jedoch sind auch andere Formen denkbar. Die Auflageflächen 24 der Bauplattformsegmente 22 sind daher quadratisch ausgebildet. In dem dargestellten Ausführungsbeispiel ist lediglich ein Teil der Bauplattform 20 dargestellt. Dabei soll verdeutlicht werden, dass die Bauplattformsegmente 22 derart zueinander angeordnet sind, dass die Anordnung ihrer Auflageflächen 24 einer Kontur zumindest einer ersten, auf der Bauplattform 20 auszubildenden Bauteilschicht beziehungsweise in dem dargestellten Ausführungsbeispiel auch einer Kontur 26 des herzustellenden Bauteils 12 in einem Auflagebereich 30 auf der Bauplattform 20 nachempfunden ist. Man erkennt, dass die Fläche der ersten Bauteilschicht beziehungsweise eine Fläche 28 des Auflagebereichs 30 des Bauteils 12 vollständig innerhalb der Anordnung der Auflageflächen 24 angeordnet ist.

Des Weiteren erkennt man, dass die Bauplattform 20 aus einer Vielzahl von Bauplattformsegmenten 22 mit gleichförmig ausgebildeten Auflageflächen 24 ausgebildet ist. In dem dargestellten Ausführungsbeispiel sind die einzelnen Bauplattformsegmente 22 magnetisch miteinander verbunden. Hierzu sind die einzelnen Bauplattformsegmente 22 aus einem magnetisierbaren Material aufgebaut. Die Bauplattformsegmente 22 können dabei aus Metall oder einer Metall-Legierung bestehen. Es ist aber auch denkbar, dass die Bauplattformsegmente 22 aus Keramik oder einem hitzebeständigen Kunststoff ausgebildet werden. Um eine entsprechende magnetische Verbindung zu gewährleisten, müssten die nicht aus Metall bestehenden Bauplattformsegmente 22 zumindest in Teilbereichen magnetisierbare Flächen oder Elemente aufweisen. Allerdings besteht auch die Möglichkeit, dass die Bauplattformsegmente 22 auf einem Grundträger angeordnet sind (nicht dargestellt). Dieser Grundträger kann dabei eine Vielzahl von Ausnehmungen zur Aufnahme und Anordnung der Bauplattformsegmente 22 aufweisen. In diesem Fall müssen die Bauplattformsegmente 22 kein magnetisierbares Material umfassen. Auch andere, insbesondere mechanische Verbindungen zwischen den einzelnen Bauplattformsegmenten 22 sind denkbar.

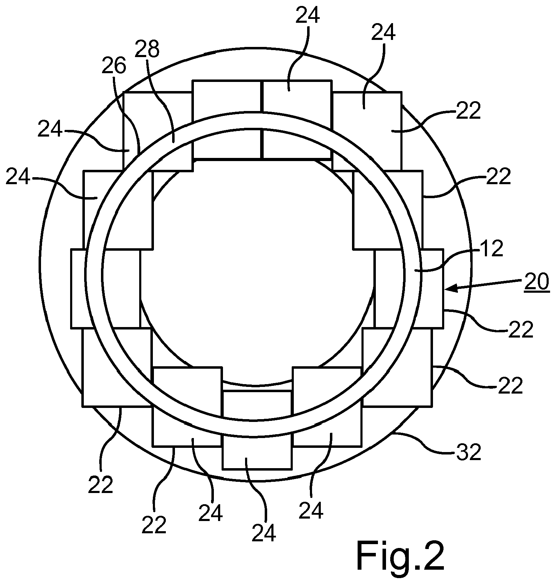

Fig. 2 zeigt eine schematisch dargestellte Aufsicht auf eine Bauplattform 20 der Schichtbauvorrichtung 10 gemäß einer zweiten Ausführungsform. Man erkennt die unterschiedliche Anordnung der Bauplattformsegmente 22 zueinander. Insgesamt bilden sie eine Art Kreisform (siehe Hüllkurve 32). Man erkennt, dass die Kontur 26 und damit auch die Fläche 28 des Bauteils 12 vollständig innerhalb der Anordnung der Auflageflächen 24 angeordnet ist. Die Hüllkurve 32 soll dabei die idealisierte äußere und innere Begrenzung der Auflageflächen 24 der Bauplattformsegmente 22 darstellen. Da es sich im vorliegenden Ausführungsbeispiel - wie auch in dem Ausführungsbeispiel gemäß Fig. 1 - um ein ringförmiges, herzustellendes Bauteil 12 handelt, können die Flächen innerhalb und außerhalb der Hüllkurve 32 frei bleiben. Ein Auftrag von Bauteilwerkstoff ist nicht notwendig. Dementsprechend entfällt auch der Abtransport von großen Mengen überschüssigen Bauteilwerkstoff.

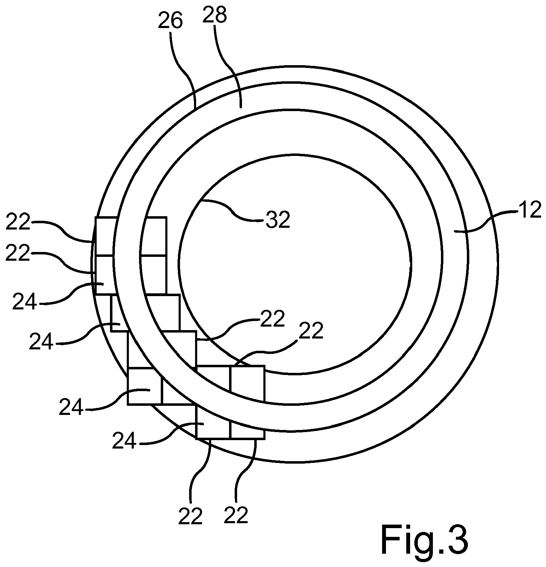

Fig. 3 zeigt eine schematisch dargestellte Aufsicht auf eine Bauplattform 20 einer Schichtbauvorrichtung 10 gemäß einer dritten Ausführungsform. Man erkennt, dass im Unterschied zu dem in Fig. 2 dargestellten Ausführungsbeispiel die Kontur 26 sowie die Fläche 28 des herzustellenden Bauteils 12 beziehungsweise deren erste Bauteilschicht durch eine größere Anzahl an Bauplattformsegmenten 22 mit entsprechenden Auflageflächen 24 nachgebildet werden. Es wird deutlich, dass über eine Verkleinerung der Auflageflächen 24 die Kontur 26 des Bauteils 12 beziehungsweise der ersten aufzutragenden Bauteilschicht zur Herstellung des Bauteils 12 noch genauer nachempfunden werden können. Die entsprechende Hüllkurve 32 schmiegt sich noch näher an die tatsächliche Kontur 26 des Bauteils 12 an.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Vorrichtung
- 12: Bauteil
- 14: Strahlungsquelle
- 16: Hochenergiestrahl
- 18: Aufbau- und Fügezone
- 20: Bauplattform
- 22: Bauplattformsegment
- 24: Auflagefläche
- 26: Kontur
- 28: Fläche
- 30: Auflagebereich
- 32: Hüllkurve

## Patentansprüche

1. Schichtbauvorrichtung zur additiven Herstellung zumindest eines Bauteilbereichs eines Bauteils (12), insbesondere eines Bauteils einer Strömungsmaschine, durch ein additives Schichtbauverfahren umfassend mindestens eine Strahlungsquelle (14) zum Erzeugen wenigstens eines Hochenergiestrahls (16), mittels welchem mindestens eine Pulverschicht eines Bauteilwerkstoffs im Bereich einer Aufbau- und Fügezone (18) einer Bauplattform (20) lokal zu wenigstens einer Bauteilschicht verfestigbar ist, wobei die Bauplattform (20) aus mehreren, lösbar miteinander verbundenen Bauplattformsegmenten (22) mit jeweiligen Auflageflächen (24) ausgebildet ist,
**dadurch gekennzeichnet, dass**
die Bauplattformsegmente (22) derart zueinander angeordnet sind, dass die Anordnung ihrer Auflageflächen (24) einer Kontur zumindest einer ersten, auf der Bauplattform (20) aufzutragenden Bauteilschicht und/oder einer Kontur (26) des herzustellenden Bauteils (12) in einem Auflagebereich (30) auf der Bauplattform (20) nachempfunden ist, wobei eine Fläche der ersten Bauteilschicht und/oder eine Fläche (28) des Auflagebereichs (30) des Bauteils (12) vollständig innerhalb der Anordnung der Auflageflächen (24) angeordnet ist.

2. Schichtbauvorrichtung nach Anspruch 1,
**dadurch gekennzeichnet, dass**
die Auflageflächen (24) der Bauplattformsegmente (22) quadratisch, rechteckig, rautenförmig oder vieleckig ausgebildet sind.

3. Schichtbauvorrichtung nach Anspruch 2,
**dadurch gekennzeichnet, dass**
die Bauplattform (20) aus einer Vielzahl von Bauplattformsegmenten (22) mit gleichen oder unterschiedlich ausgebildeten Auflageflächen (24) ausgebildet ist.

4. Schichtbauvorrichtung nach einem der vorhergehenden Ansprüchen,
**dadurch gekennzeichnet, dass**
die Schichtbauvorrichtung (10) mindestens eine unterhalb der jeweiligen Bauplattformsegmente (22) angeordnete und damit wirkverbundene Hebe- und Senkvorrichtung umfasst.

5. Schichtbauvorrichtung nach Anspruch 4,
**dadurch gekennzeichnet, dass**
jedem Bauplattformsegment (22) eine Hebe- und Senkvorrichtung zugeordnet ist oder dass mehrere Bauplattformsegmente (22) mittels einer Hebe- und Senkvorrichtung bewegbar sind.

6. Schichtbauvorrichtung nach einem der vorhergehenden Ansprüche,
**dadurch gekennzeichnet, dass**
die Bauplattformsegmente (22) auf einem Grundträger angeordnet sind.

7. Schichtbauvorrichtung nach Anspruch 6,
**dadurch gekennzeichnet, dass**
der Grundträger eine Vielzahl von Ausnehmungen zur Aufnahme und Anordnung der Bauplattformsegmente (22) aufweist.

8. Schichtbauvorrichtung nach einem der vorhergehenden Ansprüche,
**dadurch gekennzeichnet, dass**
die Bauplattformsegmente (22) magnetisch und/oder mechanisch miteinander verbindbar sind.

9. Schichtbauvorrichtung nach Anspruch 8,
**dadurch gekennzeichnet, dass**
die Bauplattformsegmente (22) mittels mindestens einer Schablone miteinander verbindbar sind.

10. Schichtbauvorrichtung nach einem der vorhergehenden Ansprüche,
**dadurch gekennzeichnet, dass**
die Auflagefläche (24) des Bauplattformsegments (22) eine Längs- und/oder Querstreckung zwischen 0,5 cm und 5,0 cm aufweist.

11. Schichtbauverfahren zum additiven Herstellen zumindest eines Bauteilbereichs eines Bauteils (12), insbesondere eines Bauteils (12) einer Strömungsmaschine, umfassend zumindest folgende Schritte:
a) Auftragen von mindestens einer Pulverschicht eines Werkstoffs im Bereich einer Aufbau- und Fügezone (18) mindestens einer absenkbaren Bauplattform (20);
b) Schichtweises und lokales Verschmelzen und/oder Versintern des Werkstoffs zum Ausbilden einer Bauteilschicht durch selektives Belichten des Werkstoffs mit wenigstens einem Hochenergiestrahl (16) gemäß einer vorbestimmten Belichtungsstrategie;
c) Schichtweises Absenken der Bauplattform (20) um eine vordefinierte Schichtdicke; und
d) Wiederholen der Schritte a) bis c) bis zur Fertigstellung des Bauteilbereichs,
**dadurch gekennzeichnet,**
**dass** vor Schritt a) die Bauplattform (20) aus mehreren, lösbar miteinander verbundenen Bauplattformsegmenten (22) mit jeweiligen Auflageflächen (24) gefügt wird, derart, dass die Anordnung der Auflageflächen (24) der Bauplattformsegmente (22) einer Kontur zumindest einer ersten, auf der Bauplattform (20) aufzutragenden Bauteilschicht und/oder einer Kontur (26) des herzustellenden Bauteils (12) in einem Auflagebereich (30) auf der Bauplattform (20) nachempfunden ist, wobei eine Fläche der ersten Bauteilschicht und/oder eine Fläche (28) des Auflagebereichs (30) des Bauteils (12) vollständig innerhalb der Anordnung der Auflageflächen (24) angeordnet ist.

12. Verfahren nach Anspruch 11,
**dadurch gekennzeichnet, dass**
das vor oder nach dem schichtweisen Absenken der Bauplattform (20) gemäß Schritt c) ein Lösen und Absenken von für den weiteren Schichtaufbau nicht benötigten Bauteilsegmenten (22) durchgeführt wird.

13. Verfahren nach einem der Ansprüche 11 oder 12,
**dadurch gekennzeichnet, dass**
das die Anordnung und/oder das Lösen und/oder eine Bewegung der Bauteilsegmente (22) zueinander rechnergesteuert erfolgt.

14. Bauteil für eine Strömungsmaschine, insbesondere Verdichter- oder Turbinenbauteil,
**dadurch gekennzeichnet, dass**
dieses zumindest bereichsweise oder vollständig mittels einer Vorrichtung (10) gemäß einem der Ansprüche 1 bis 10 und/oder durch ein Verfahren gemäß einem der Ansprüche 11 bis 13 erhalten ist.
